# EUROPEAN PATENT APPLICATION

(11) **EP 4 841 999 A1**
(43) Date of publication of application: **18.11.2026**
(21) Application number: 25305697.2
(22) Date of filing: 16.05.2025
(51) Int. Cl.: H04N 21/81

(54) **RECONFIGURATION PACKAGES FOR ANIMATION BITSTREAM FORMAT AND COMPRESSION FOR AVATAR REPRESENTATION FORMAT**

(71) Applicant: InterDigital CE Patent Holdings, SAS, 75017 Paris (FR)
(72) Inventor: COVA REGATEIRO, João Pedro, 35220 CHATEAUBOURG (FR); GOSSELIN, Philippe Henri, 35340 LIFFRE (FR); AVRIL, Quentin, 35830 BETTON (FR); LE CLERC, Francois, 35590 L'HERMITAGE (FR)
(74) Representative: Rittner, Karsten

(57) **Abstract**

Some embodiments of a method may include: obtaining avatar animation reconfiguration information, wherein the avatar animation reconfiguration information comprises an avatar reconfiguration flag; and generating an Avatar Animation Unit (AAU) message corresponding to the avatar animation reconfiguration information, wherein the AAU message satisfies an MPEG-based standard; encoding the AAU message; and transmitting the encoded AAU message to a receiving device. Some embodiments of a method may include: receiving an encoded Avatar Animation Unit (AAU) message; decoding the AAU message, wherein the AAU message satisfies an MPEG-based standard; obtaining avatar animation reconfiguration information from the AAU message, wherein the avatar animation reconfiguration information comprises an avatar reconfiguration flag; and processing the avatar animation reconfiguration information based on the avatar reconfiguration flag.

## Description

### INCORPORATION BY REFERENCE

The present application incorporates by reference in their entirety the following application(s): European Patent Application Serial No. EP25305040, entitled "ANIMATION BITSTREAM FORMAT AND COMPRESSION FOR AVATAR REPRESENTATION FORMAT" and filed January 14, 2025 ("'040 application").

### BACKGROUND

The present application is related to avatar data.

### SUMMARY

A first example method in accordance with some embodiments may include: obtaining avatar animation reconfiguration information, wherein the avatar animation reconfiguration information includes an avatar reconfiguration flag; generating an Avatar Animation Unit (AAU) message corresponding to the avatar animation reconfiguration information, wherein the AAU message satisfies an MPEG-based standard; encoding the AAU message; and transmitting the encoded AAU message to a receiving device.

Some embodiments of the first example method may further include: determining that the avatar reconfiguration flag is equal to zero; and generating an avatar remove flag.

For some embodiments of the first example method, the avatar animation reconfiguration information further includes the avatar remove flag.

Some embodiments of the first example method may further include initializing a state of the avatar remove flag.

Some embodiments of the first example method may further include: determining that the avatar remove flag is equal to zero; and adding avatar animation configuration information to the AAU message, wherein the avatar animation configuration information corresponds to the avatar remove flag.

Some embodiments of the first example method may further include: determining that the avatar reconfiguration flag is equal to one; and adding avatar animation configuration information to the AAU message, wherein the avatar animation configuration information corresponds to the avatar remove flag.

For some embodiments of the first example method, the avatar remove flag corresponds to at least one element of a set including a controller remove flag, a morph remove flag, a joint remove flag, a keypoint remove flag, a keypoint 2D remove flag, and a landmark remove flag.

A first example apparatus in accordance with some embodiments may include: a processor; and a memory storing instructions operative, when executed by the processor, to cause the apparatus to perform any one of the methods listed above.

A second example method in accordance with some embodiments may include: receiving an encoded Avatar Animation Unit (AAU) message; decoding the AAU message, wherein the AAU message satisfies an MPEG-based standard; obtaining avatar animation reconfiguration information from the AAU message, wherein the avatar animation reconfiguration information includes an avatar reconfiguration flag; and processing the avatar animation reconfiguration information based on the avatar reconfiguration flag.

For some embodiments of the second example method, processing the avatar animation reconfiguration information includes processing payload data in the AAU message.

For some embodiments of the second example method, processing the avatar animation reconfiguration information includes processing one or more units of avatar animation parameter data.

Some embodiments of the second example method may further include: determining that the avatar reconfiguration flag is equal to one; and replacing one or more avatar animation configuration data units.

Some embodiments of the second example method may further include: determining that the avatar reconfiguration flag is equal to zero; determining that an avatar remove flag is equal to zero; and removing avatar animation configuration information from memory, wherein the avatar animation configuration information corresponds to the avatar remove flag.

Some embodiments of the second example method may further include: determining that the avatar reconfiguration flag is equal to zero; determining that an avatar remove flag is equal to one; and adding avatar animation configuration information to memory, wherein the avatar animation configuration information corresponds to the avatar remove flag.

A second example apparatus in accordance with some embodiments may include: a processor; and a memory storing instructions operative, when executed by the processor, to cause the apparatus to perform any one of the methods listed above.

### BRIEF DESCRIPTION OF THE DRAWINGS

The following detailed description will be better understood when read in conjunction with the appended drawings, in which there are shown examples of one or more of the multiple embodiments of the present application. It should be understood, however, that the embodiments described herein are not limited to the precise arrangements and instrumentalities shown in the drawings. In the drawings:
FIG. 1 is a system diagram illustrating an example set of interfaces for a system according to some embodiments.
FIG. 2 is a message configuration diagram showing an example non-keyframe AAU message according to some embodiments.
FIG. 3 is a message configuration diagram showing an example keyframe AAU message according to some embodiments.
FIG. 4 is a message configuration diagram showing a first example bitstream with a configuration unit according to some embodiments.
FIG. 5 is a message configuration diagram showing a second example bitstream with a configuration unit according to some embodiments.
FIG. 6 is a message configuration diagram showing a third example bitstream with a configuration unit according to some embodiments.
FIG. 7 is a flowchart illustrating an example processing model for a reconfiguration unit according to some embodiments.
FIG. 8 is a flowchart illustrating an example encoding process according to some embodiments.
FIG. 9 is a flowchart illustrating an example decoding process according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "In at least one embodiment, ...." For brevity and clarity of presentation, this implied leading clause is not repeated *ad nauseum* in the detailed description.

### DETAILED DESCRIPTION

In describing the various embodiments of the present application, certain terminology is used herein for convenience only and should not be considered as limiting such embodiments. In the drawings, the same reference numerals are employed for designating the same elements throughout the several figures and the present description.

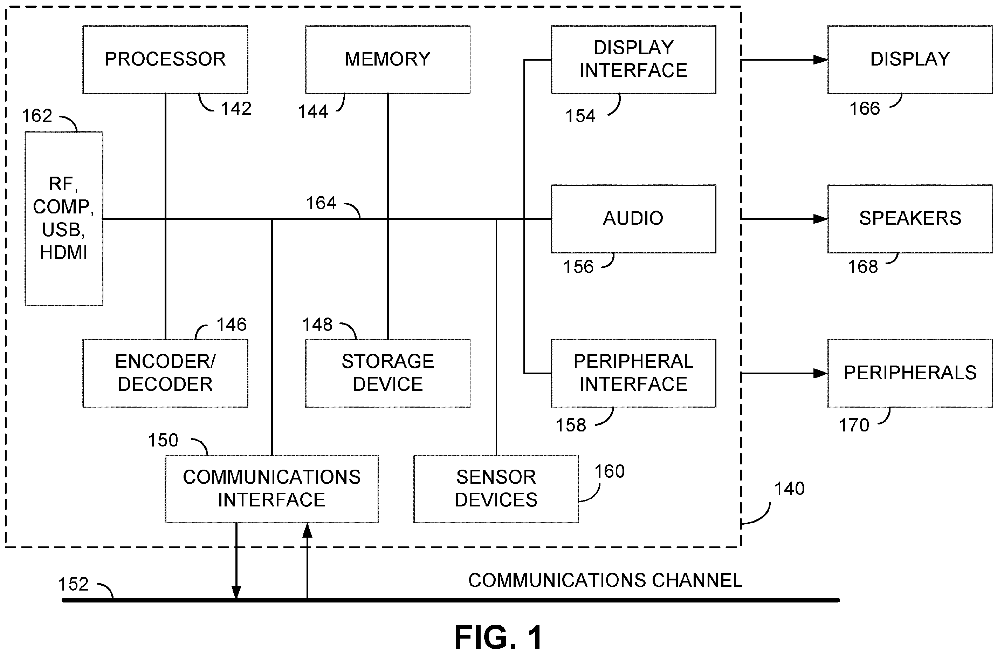

FIG. 1 is a system diagram illustrating an example set of interfaces for a system according to some embodiments. An extended reality display device, together with its control electronics, may be implemented using a system such as the system of FIG. 1. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

A User Equipment (UE) may correspond to any eXtended Reality (XR) device/node which may come in variety of form factors. Typical UE (e.g., XR UE) may include, but not limited to the following: Head Mounted Displays (HMD), optical see-through glasses and video see-through HMDs for Augmented Reality (AR) and Mixed Reality (MR), mobile devices with positional tracking and camera, wearables etc. In addition to the above, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

This application relates to the storage, transmission and compression of avatar animation data using the Avatar Representation Format (ARF). See *Information Technology - Coded Representation of Immersive Media - Part 39: Avatar Representation Format,* ISO/IEC 23090-39:2025 (2025) (*"ISO*/*IEC 23090-*39:2025").

This application relates to transmitting re-configuration unit packages related to the support and capabilities of the animation streams for some embodiments. The current effort in MPEG provides support to animate avatar representations and stream its animation parameters over the network. See the '040 application.

ARF arrived with rich properties and was able to provide the support for realistic renderings, animations, and parametrizations that allow users to personalize and animate their characters freely. See *ISO*/*IEC* 23090-39:2025. ARF's format is created with the intention of providing the first interoperable format capable of representing and efficiently transmitting avatar related properties.

This application uses re-configuration signaling of configuration unit packages to signal the capabilities and support for animation streams. The intent is to notify the client that the connection between the receiver and sender has changed the parameters of configuration e.g., dropped of a single track of animation as consequence of unavailability of tracking devices. The increased demand for video teleconferencing increases demand for efficient streaming systems for a diverse range of technologies. As understood, MPEG has yet to provide an efficient answer to the problem of streaming avatar animation parameters.

This application discusses the transmission of reconfiguration packages of animation streams for some embodiments. For some embodiments, a problem to be solved is providing a mechanism to notify the client/decoder of the connections between parties receiving and transmitting an animation stream. In the event of no longer supporting a particular tracking device, the sender transmits reconfiguration unit packages to a receiver, and the sender stops transmitting the specific animation payload data that the receiver is expecting.

### Avatar Animation Units

The general syntax and structures for the animation bitstream may be found in the '040 application.

Table 1 shows the existing avatar animation units available to the bit stream. Table 1 shows a mapping between Avatar Animation Unit (AAU) type codes and the corresponding payload content processing function.

**Table 1.**

| **auh_unit_type** | **Name of AAU type** | **Content of AAU payload** |
|---|---|---|
| 0 | AAU_TARGET | aau_config_target() |
| 1 | AAU_CONFIG | aau_config_unit() |
| 2 | AAU_CONTROL | aau_control_unit() |
| 3 | AAU_MORPH | aau_morph_unit() |
| 4 | AAU_JOINT | aau_joint_unit() |
| 5 | AAU_KEYPOINT | aau_keypoint_unit() |
| 6 | AAU_KEYPOINT2D | aau_keypoint2d_unit() |
| 7 | AAU_LANDMARK | aau_landmark_unit() |
| 8 | AAU_RSV_10 | Reserved AAU type |
| 11...31 | AAU_UNSPEC_11 | Unspecified AAU types |
| | AAU_UNSPEC_31 | |

Table 2 shows the code listing for the aau_payload() function, which creates the data fields for the aau_payload message data.

**Table 2.**

| **Code Syntax** | **No. of bits** | **Mnemonic** |
|---|---|---|
| aau_payload() | | |
| aau_timestamp; | 32 | uimsbf |
| if (auh_type == AAU_TARGET) | | |
| aau_target_unit() | | |
| else if (auh_type == AAU_CONFIG) | | |
| aau_config_unit() | | |
| else if (auh_type == AAU_CONTROL) | | |
| aau_control_unit() | | |
| else if (auh_type == AAU_MORPH) | | |
| aau_morph_unit() | | |
| else if (auh_type == AAU_JOINT) | | |
| aau_control_unit() | | |
| else if (auh_type == AAU_KEYPOINT) | | |
| aau_joint_unit() | | |
| else if (auh_type == AAU_KEYPOINT2D) | | |
| aau_control_unit() | | |
| else if (auh_unit_type == AAU_LANDMARK) | | |
| aau_landmark_unit() | | |
| else if (auh_unit_type == AAU_TEXTURE) | | |
| aau_texture_unit() | | |
| } | | |

The aau_payload() syntax construct (or function) contains the syntax elements described below.

The syntax element "aau_timestamp" is the timestamp of the AAU in ticks. The timestamp in seconds may be calculated as timestamp/timescale, in which "timescale" is signaled in the configuration AAU.

### Configuration Avatar Animation Units

Table 3 shows the code listing for the aau_config_unit() function. A configuration AAU is an AAU whose "auh_type" field is set to AAU_CONFIG. The payload of such an AAU is produced as shown in Table 3.

**Table 3.**

| **Code Syntax** | **No. of bits** | **Mnemonic** |
|---|---|---|
| aau_config_unit() | | |
| { | | |
| acu_profile_length; | 8 | uimsbf |
| acu_animation_profile; | acu_profile_length * 8 | vlc8 |
| acu_timescale; | 32 | uimsbf |
| acu_reconfig_flag; | 1 | boolean |
| acu_control_precision_minus1; | 3 | uimsbf |
| acu_controller_correpondence_flag; | 1 | boolean |
| if (acu_controller_correspondence_flag) { | | |
| acu_controllerset_id; | 3 | uimsbf |
| if (acu_reconfig_flag == 0) { | | |
| acu_controller_remove_flag; | 1 | boolean |
| } | | |
| if (acu_reconfig_flag == 1 \|\| acu_controller_remove_flag == 0) { | | |
| acu_controller_count; | 10 | uimsbf |
| for (i=0; i<acu_controller_count; i++) { | | |
| acu_target_controller_index[i]; | 10 | uimsbf |
| } | | |
| } | | |
| } | | |
| acu_morph_target_correspondence_flag; | 1 | boolean |
| if (acu_morph_target_correspondence_flag) { | | |
| acu_morphset_id; | 3 | uimsbf |
| if (acu_reconfig_flag == 0) { | | |
| acu_morph_remove_flag; | 1 | boolean |
| } | | |
| if (acu_reconfig_flag == 1 \|\| acu_morph_remove_flag == 0) { | | |
| acu_morph_target_count; | 10 | uimsbf |
| for (i=0; i<acu_morph_target_count; i++) { | | |
| acu_target_morph_target_index[i]; | 10 | uimsbf |
| } | | |
| } | | |
| } | | |
| acu_joint_correpondence_flag; | 1 | boolean |
| if (acu_joint_correspondence_flag) { | | |
| acu_jointset_id; | 3 | uimsbf |
| if (acu_reconfig_flag == 0) { | | |
| acu_joint_remove_flag; | 1 | boolean |
| } | | |
| if (acu_reconfig_flag == 1 \|\| acu_joint_remove_flag == 0) { | | |
| acu_joint_count; | 10 | uimsbf |
| for (i=0; i<acu_joint_count; i++) { | | |
| acu_target_joint_index[i]; | 10 | uimsbf |
| } | | |
| } | | |
| } | | |
| acu_keypoint_correpondence_flag; | 1 | boolean |
| if (acu_keypoint_correspondence_flag) { | | |
| acu_keypointset_id; | 3 | uimsbf |
| if (acu_reconfig_flag == 0) { | | |
| acu_keypoint_remove_flag; | 1 | boolean |
| } | | |
| if (acu_reconfig_flag == 1 \|\| acu_keypoint_remove_flag == 0) { | | |
| acu_keypoint_count; | 10 | uimsbf |
| for (i=0; i<acu_keypoint_count; i++) { | | |
| acu_target_keypoint_index[i]; | 10 | uimsbf |
| } | | |
| } | | |
| } | | |
| acu_keypoint2d_correpondence_flag; | 1 | boolean |
| if (acu_keypoint2d_correspondence_flag) { | | |
| acu_keypoint2dset_id; | 3 | uimsbf |
| if (acu_reconfig_flag == 0) { | | |
| acu_keypoint2d_remove_flag; | 1 | boolean |
| } | | |
| if (acu_reconfig_flag == 1 \|\| acu_keypoint2d_remove_flag == 0) { | | |
| acu_keypoint2d_count; | 16 | uimsbf |
| for (i=0; i<acu_keypoint2d_count; i++) { | | |
| acu_target_keypoint2d_index[i]; | 16 | uimsbf |
| } | | |
| } | | |
| } | | |
| acu_landmark_correpondence_flag; | 1 | boolean |
| if (acu_landmark_correspondence_flag) { | | |
| acu_landmarkset_id; | 3 | uimsbf |
| if (acu_reconfig_flag == 0) { | | |
| acu_landmark_remove_flag; | 1 | boolean |
| } | | |
| if (acu_reconfig_flag == 1 \|\| acu_landmark_remove_flag == 0) { | | |
| acu_landmark_count; | 10 | uimsbf |
| for (i=0; i<acu_landmark_count; i++) { | | |
| acu_target_landmark_index[i]; | 10 | uimsbf |
| } | | |
| } | | |
| } | | |
| acu_reserved_correspondence_flags; | 4 | booleans |
| acu_reserved_unspecified_flags; | 22 | booleans |
| } | | |

The aau_config_unit() syntax construct (or function) contains the syntax elements described below.

The syntax element "acu_profile_length" is the number of characters in the profile string signalled by acu_animation_profile.

The syntax element "acu_animation_profile" is a character string with the name of the profile that generated stream conforms to.

The syntax element "acu_timescale" is the number of ticks per second.

The syntax element "acu_control_precision_minus1" plus 1 specifies the size in bytes of the target avatar index in control AAUs. The value of this field is greater than 0 and smaller than or equal to 3.

The syntax element "acu_controller_correspondence_flag" is a flag indicating whether controller correspondence information is signalled in this configuration AAU. A value of 0 indicates that no correspondence information is present. A value of 1 indicates that controller correspondence information is present in the configuration AAU.

The syntax element "acu_ controller _joint_index[i]" is the index of the target controller corresponding to the source avatar's i-th controller.

The syntax element "acu_ morph target _correspondence_flag" is a flag indicating whether morph target correspondence information is signalled in this configuration AAU. A value of 0 indicates that no correspondence information is present. A value of 1 indicates that morph target correspondence information is present in the configuration AAU.

The syntax element "acu_target_morph target_index[i]" is the index of the target morph target corresponding to the source avatar's i-th morph target.

The syntax element "acu_joint_correspondence_flag" is a flag indicating whether joint correspondence information is signalled in this configuration AAU. A value of 0 indicates that no correspondence information is present. A value of 1 indicates that joint correspondence information is present in the configuration AAU.

The syntax element "acu_target_joint_index[i]" is the index of the target avatar skeleton joint corresponding to the source avatar's i-th joint.

The syntax element "acu_keypoint_correspondence_flag" is a flag indicating whether keypoint correspondence information is signalled in this configuration AAU. A value of 0 indicates that no correspondence information is present. A value of 1 indicates that keypoint correspondence information is present in the configuration AAU.

The syntax element "acu_target keypoint_index[i]' is the index of the target keypoint corresponding to the source avatar's i-th keypoint.acu_keypoint_correspondence_flag" is a flag indicating whether keypoint correspondence information is signalled in this configuration AAU. A value of 0 indicates that no correspondence information is present. A value of 1 indicates that keypoint correspondence information is present in the configuration AAU.

The syntax element "acu_target_keypoint_index[i]'' is the index of the target keypoint corresponding to the source avatar's i-th keypoint.

The syntax element "acu_keypoint2d_correspondence_flag" is a flag indicating whether 2D keypoint correspondence information is signalled in this configuration AAU. A value of 0 indicates that no correspondence information is present. A value of indicates that 2D keypoint correspondence information is present in the configuration AAU.

The syntax element "acu_target_keypoint2d_index[i]" is the index of the target 2D keypoint corresponding to the source avatar's i-th 2D keypoint.

The syntax element "acu_landmarks_correspondence_flag" is a flag indicating whether landmark correspondence information is signalled in this configuration AAU. A value of 0 indicates that no correspondence information is present. A value of 1 indicates that landmarks correspondence information is present in the configuration AAU.

The syntax element "acu_landmarkset_id" is an integer identifying which collection of landmarks is used from the avatar.

The syntax element "acu_target_landmark_index[i]" is the index of the target avatar skeleton joint corresponding to the source avatar's i-th joint.

The syntax element "acu_keypoint2dset _id" is an integer identifying which collection of 2D keypoints is used from the avatar.

The syntax element "acu_keypointset_id" is an integer identifying which collection of keypoints is used from the avatar.

The syntax element "acu_jointset_id" is an integer identifying which collection of joints is used from the avatar.

The syntax element "acu_morphset _id" is an integer identifying which collection of morphtargets is used from the avatar.

The syntax element "acu_controllerset_id" is an integer identifying which collection of animation controllers is used from the avatar.

The syntax element "acu_reconfig_flag" is a Boolean flag that identifies if the stream contains new configuration data. In this case, all current configurations are removed before continuing the decoding.

The syntax element "acu_controller_remove_flag" is a Boolean flag that identifies if an existing controller configuration is to be ignored or removed from the receiver end.

The syntax element "acu_morph_remove_flag" is a Boolean flag that identifies if an existing morph target configuration is to be ignored or removed from the receiver end.

The syntax element "acu_joint_remove_flag" is a Boolean flag that identifies if an existing joint configuration is to be ignored or removed from the receiver end.

The syntax element "acu_keypoint_remove_flag" is a Boolean flag that identifies if an existing keypoint configuration is to be ignored or removed from the receiver end.

The syntax element "acu_keypoint2d_remove_flag" is a Boolean flag that identifies if an existing keypoint2d configuration is to be ignored or removed from the receiver end.

The syntax element "acu_landmark_remove_flag" is a Boolean flag that identifies if an existing landmark configuration is to be ignored or removed from the receiver end.

The syntax element "acu_reserved_correspondence_flags" are reserved flags for the correspondences of future avatar components.

The syntax element "acu_reserved_unspecified_flags" are flags for unspecified features.

### ReConfiguration Avatar Animation Unit

Table 3 includes the semantics of a configuration unit used when establishing a communication between senders and receivers. The configuration unit permits transmission and establishment of animation configurations used to animate an avatar at the receiver end.

The sender establishes what parameters to animate at the receiver end. For example, if *acu_morph_target_correspondence_flag* is present, the sender indicates the blendshape set by setting the *acu_morphset_id* identifier. The sender sets the identifier *acu_morphset_id* to an integer to identify which set on the receiver's blendshape set list to use. Once the set is established, the sender transmits the indice(s) that identify which list(s) of blendshapes within the set will be transmitting animations parameters. The main idea is to establish a correspondence mapping between the sender and receiver regarding their avatar representation and device equipment capabilities (e.g., headset, hand tracking, face tracking, hand tracking body tracking, landmarks tracking, and other parameters).

For some embodiments, this application solves a problem that occurs if the sender decides to: (1) reset all the configuration parameters; and/or (2) remove or update at least one capability from the initial configuration.

For the first scenario, the sender sends an AAU_CONFIG unit and sets *acu_reconfig_flag* to one to reset all the configuration parameters. Once these parameters are set, the sender may then resend new configuration parameters. The receiver will replace all the existing parameters with these new configuration parameters.

For the second scenario, if *acu_reconfig_flag* is zero, the sender may remove, update, or add new configuration units. For instance, the sender may remove the controller configuration unit, update the morphtarget configuration unit, and/or add a new landmark configuration (assuming the landmarks configuration unit was not previously set by the bitstream).

If the sender sets an *"acu_*_remove_flag"* flag (in which the asterisk is a wildcard) to one and clears *acu_reconfig_flag* to zero, this configuration tells the receiver to ignore or remove the capability and correspondence previously set on its end. This scenario permits the sender side to clear out tracking or animation capabilities while maintaining a live connection between all parties. This scenario also notifies all parties of any changes.

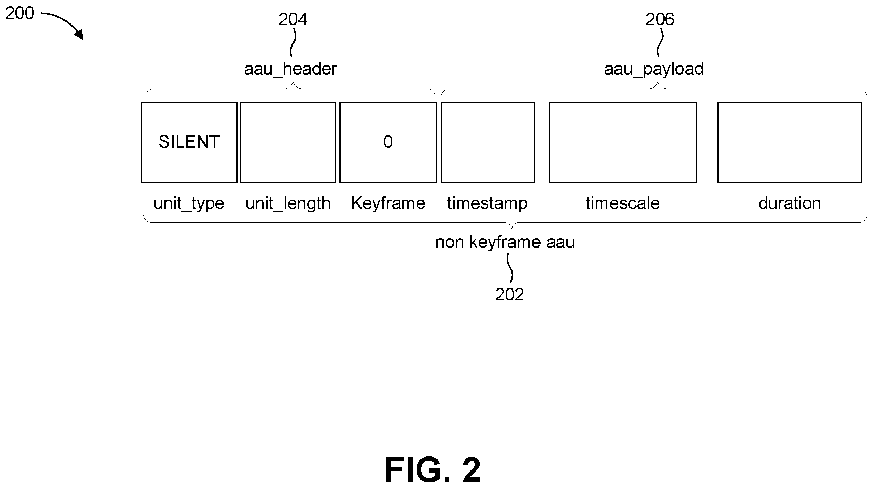

FIG. 2 is a message configuration diagram showing an example non-keyframe AAU message according to some embodiments. The message configuration 200 of FIG. 2 shows a non-keyframe AAU message 202. The non-keyframe AAU message 202 includes an aau_header field 204 and an aau_payload field 206.

The aau_header field 204 includes a unit_type field, a unit_length field, and a keyframe number. For the example shown in FIG. 2, the unit_type is equal to SILENT. The unit_length field indicates the byte length of the message. The keyframe number is zero (0) for this example.

The aau_payload field 206 includes a timestamp field, a timescale field, and a duration field. The timestamp in seconds may be calculated as timestamp/timescale. The duration field indicates the length of the animation.

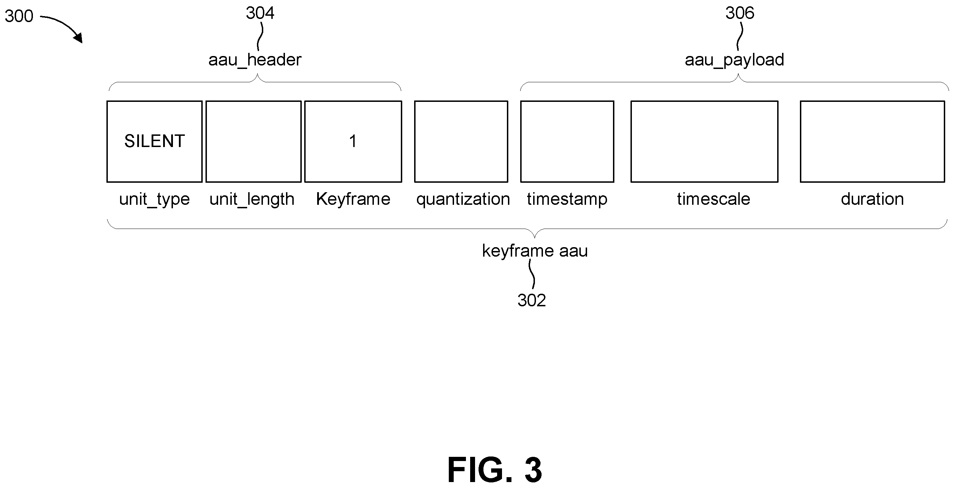

FIG. 3 is a message configuration diagram showing an example keyframe AAU message according to some embodiments.

The message configuration 300 of FIG. 3 shows a keyframe AAU message 302. The keyframe AAU message 302 includes an aau_header field 304, a quantization field, and an aau_payload field 306.

The aau_header field 304 includes a unit_type field, a unit_length field, and a keyframe number. For the example shown in FIG. 3, the unit_type is equal to SILENT. The unit_length field indicates the byte length of the message. The keyframe number is one (1) for this example.

The quantization field indicates the value for a quantization parameter.

The aau_payload field 306 includes a timestamp field, a timescale field, and a duration field. The timestamp in seconds may be calculated as timestamp/timescale. The duration field indicates the length of the animation.

### Processing Model for ReConfiguration Units

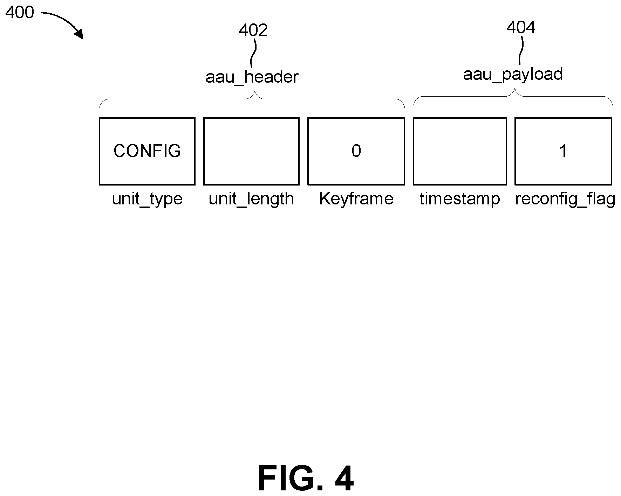

FIG. 4 is a message configuration diagram showing a first example bitstream with a configuration unit according to some embodiments. FIG. 4 shows a bitstream example for a scenario in which *acu_reconfig_flag* is one (1). The bitstream example of FIG. 4 is for a configuration unit. The exact configurations of some of the fields are omitted to enable the figure to be simplified. The message configuration 400 of FIG. 4 shows an aau_header field 402 and an aau_payload field 404.

The aau_header field 402 includes a unit_type field, a unit_length field, and a keyframe number. For the example shown in FIG. 4, the unit_type is equal to CONFIG. The unit_length field indicates the byte length of the message. The keyframe number is zero (0) for this example.

The aau_payload field 404 includes a timestamp field, and a reconfig_flag field. The reconfig_flag field is set to one (1) for this example.

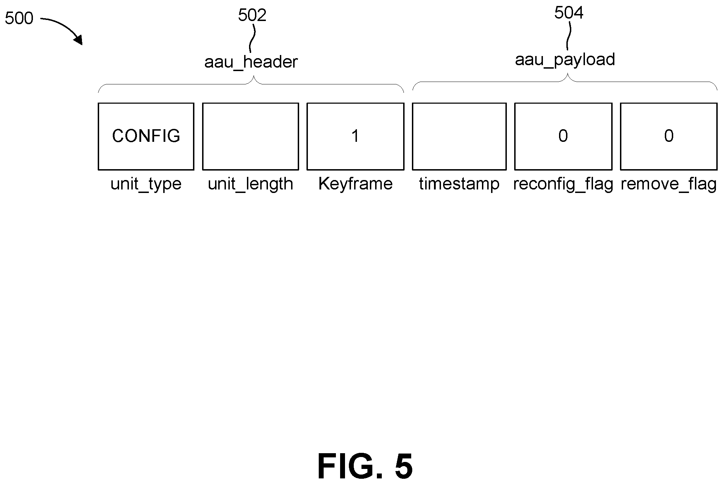

FIG. 5 is a message configuration diagram showing a second example bitstream with a configuration unit according to some embodiments. FIG. 5 shows a bitstream example for a scenario in which *acu_reconfig_flag* is zero (0) and *acu_remove_flag* is zero (0). The bitstream example of FIG. 5 is for a configuration unit. The exact configurations of some of the fields are omitted to enable the figure to be simplified. The message configuration 500 of FIG. 5 shows an aau_header field 502 and an aau_payload field 504.

The aau_header field 502 includes a unit_type field, a unit_length field, and a keyframe number. For the example shown in FIG. 5, the unit_type is equal to CONFIG. The unit_length field indicates the byte length of the message. The keyframe number is one (1) for this example.

The aau_payload field 504 includes a timestamp field, a reconfig_flag field, and a remove_flag field. The reconfig_flag field indicates whether to reconfigure the animation parameters and is cleared to zero (0) for this example. The reconfig_flag field is assigned a value to match the value of *acu_reconfig_flag.* The remove_flag field is cleared to zero (0) for this example. The remove_flag field is assigned a value to match the value of *acu_remove_flag.*

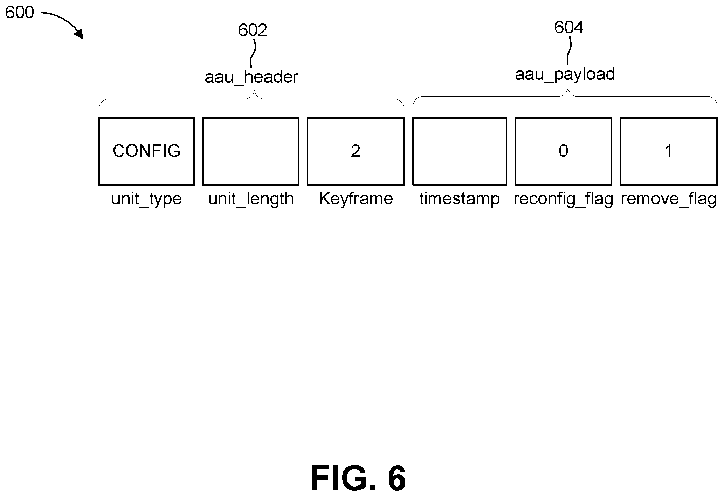

FIG. 6 is a message configuration diagram showing a third example bitstream with a configuration unit according to some embodiments. FIG. 6 shows a bitstream example for a scenario in which acu_reconfig_flag is zero (0) and acu_remove_flag is zero (0). The bitstream example of FIG. 6 is for a configuration unit. The exact configurations of some of the fields are omitted to enable the figure to be simplified. The message configuration 600 of FIG. 6 shows an aau_header field 602 and an aau_payload field 604.

The aau_header field 602 includes a unit_type field, a unit_length field, and a keyframe number. For the example shown in FIG. 6, the unit_type is equal to CONFIG. The unit_length field indicates the byte length of the message. The keyframe number is two (2) for this example.

The aau_payload field 604 includes a timestamp field, a reconfig_flag field, and a remove_flag field. The reconfig_flag field indicates whether to reconfigure the animation parameters and is cleared to zero (0) for this example. The reconfig_flag field is assigned a value to match the value of acu_reconfig_flag. The remove_flag field is set to one (1) for this example. The remove_flag field is assigned a value to match the value of acu_remove_flag.

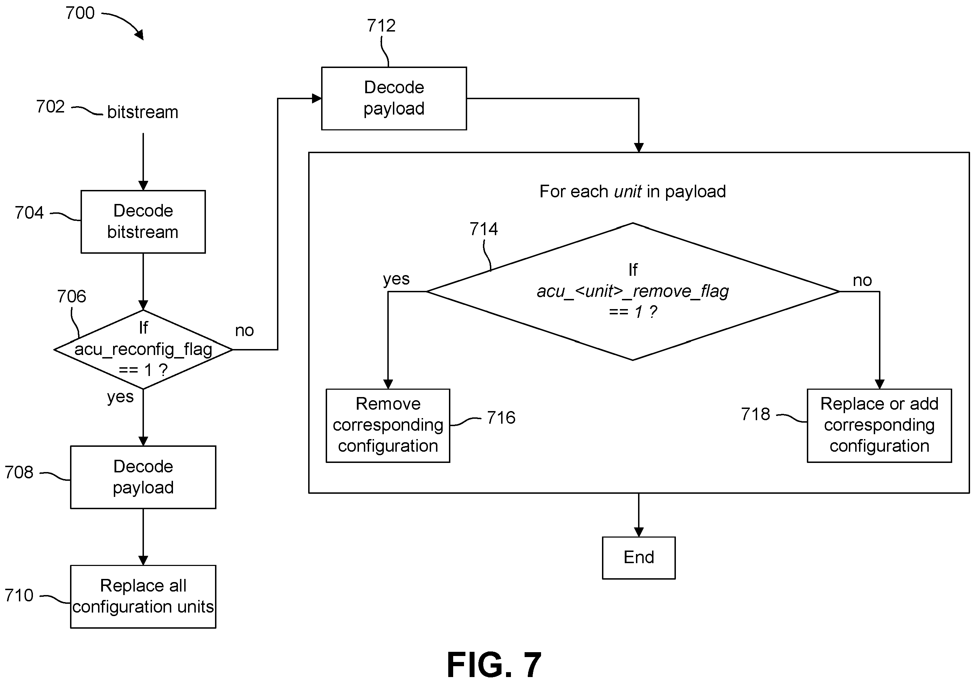

FIG. 7 is a flowchart illustrating an example processing model for a reconfiguration unit according to some embodiments. FIG. 7 shows a process 700 for a reconfiguration unit to handle the reconfiguration signaling and scenarios mentioned above.

A bitstream is received 702 at the receiver end. The bitstream may be encrypted and compressed.

The bitstream is decrypted and decompressed and each attribute is decoded 704 at the receiver end.

A determination 706 is made regarding the value of the *acu_reconfig_flag* flag. If the *acu_reconfig_flag* flag is equal to 1, then the bitstream payload is decoded 708 with the configuration unit(s), and the existing configuration units are replaced 710 at the receiver end. The receiver removes all existing configurations and creates new configurations using the newly decoded configurations.

If the *acu_reconfig_flag* flag is equal to 0, then each configuration unit is individually decoded 712 and evaluated.

For each supported configuration unit, the decoder evaluates 714 the value of the *acu_<unit>_remove_flag* flag, in which "<unit>" is the name of the unit. The term *"acu_<unit>_remove_flag"* may be any of the corresponding properties shown in Table 3.

For each supported configuration unit, if *acu_<unit>_remove_flag* is 1, then the evaluated configuration unit is removed or discarded 716 at the receiver end. As a result, the sender of the bitstream stops transmitting or supporting such functionality.

For each supported configuration unit, if *acu_<unit>_remove_flag* is 0, then the evaluated configuration unit is replaced or newly added 718 at the receiver end. As a result, the sender of the bitstream changes the supported functionality, begins to transmit such functionality, or supports such functionality.

For some embodiments, this application may be used in ecosystems involving immersive media coding, storage, and streaming of avatar animation data to animate digital representations either locally or remotely based on captured sensor data.

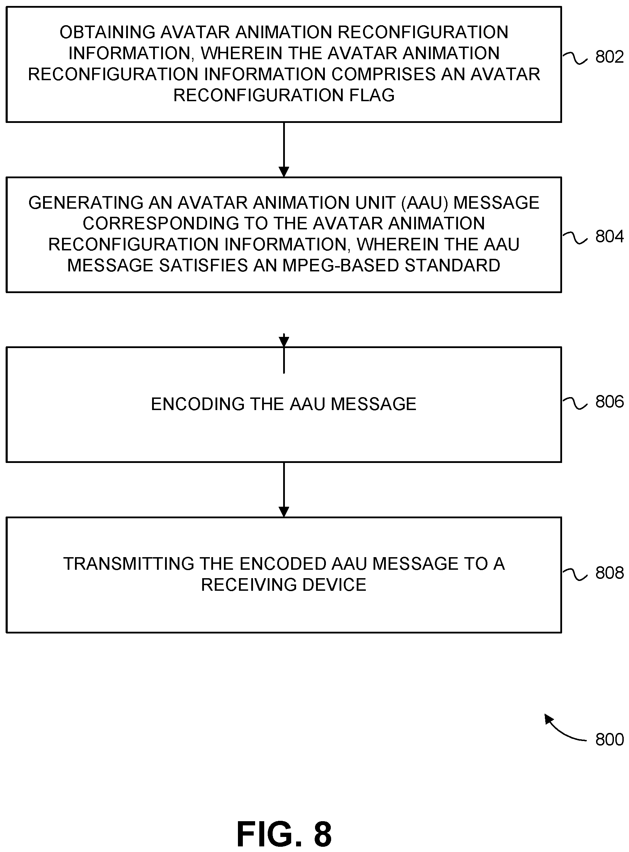

FIG. 8 is a flowchart illustrating an example encoding process according to some embodiments. For some embodiments, an example process 800 may include obtaining 802 avatar animation reconfiguration information, wherein the avatar animation reconfiguration information comprises an avatar reconfiguration flag. For some embodiments, the example process 800 may further include generating 804 an Avatar Animation Unit (AAU) message corresponding to the avatar animation reconfiguration information, wherein the AAU message satisfies an MPEG-based standard. For some embodiments, the example process 800 may further include encoding 806 the AAU message. For some embodiments, the example process 800 may further include transmitting 808 the encoded AAU message to a receiving device.

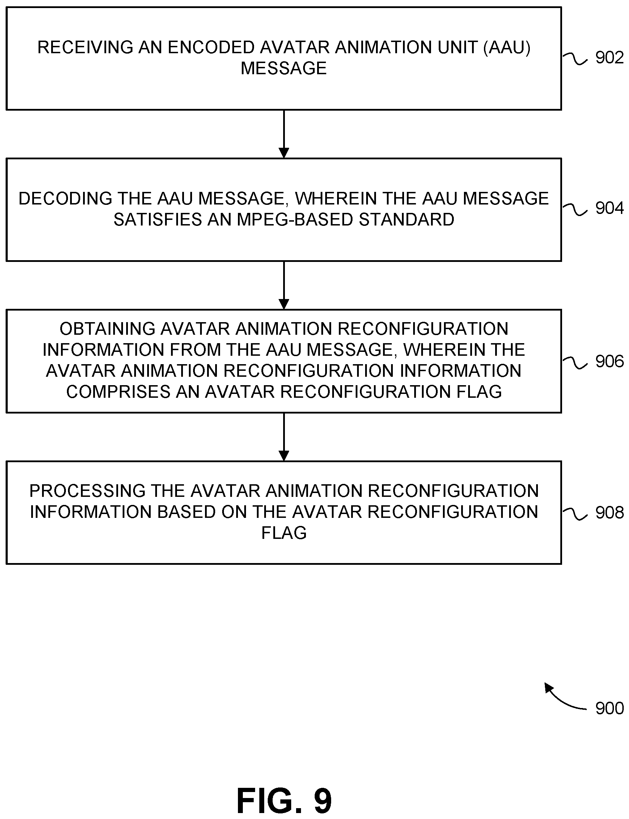

FIG. 9 is a flowchart illustrating an example decoding process according to some embodiments. For some embodiments, an example process 900 may include receiving 902 an encoded Avatar Animation Unit (AAU) message. For some embodiments, the example process 900 may further include decoding 904 the AAU message, wherein the AAU message satisfies an MPEG-based standard. For some embodiments, the example process 900 may further include obtaining 906 avatar animation reconfiguration information from the AAU message, wherein the avatar animation reconfiguration information comprises an avatar reconfiguration flag. For some embodiments, the example process 900 may further include processing 908 the avatar animation reconfiguration information based on the avatar reconfiguration flag.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

A first example method in accordance with some embodiments may include: obtaining avatar animation reconfiguration information, wherein the avatar animation reconfiguration information includes an avatar reconfiguration flag; generating an Avatar Animation Unit (AAU) message corresponding to the avatar animation reconfiguration information, wherein the AAU message satisfies an MPEG-based standard; encoding the AAU message; and transmitting the encoded AAU message to a receiving device.

Some embodiments of the first example method may further include: determining that the avatar reconfiguration flag is equal to zero; and generating an avatar remove flag.

For some embodiments of the first example method, the avatar animation reconfiguration information further includes the avatar remove flag.

Some embodiments of the first example method may further include initializing a state of the avatar remove flag.

Some embodiments of the first example method may further include: determining that the avatar remove flag is equal to zero; and adding avatar animation configuration information to the AAU message, wherein the avatar animation configuration information corresponds to the avatar remove flag.

Some embodiments of the first example method may further include: determining that the avatar reconfiguration flag is equal to one; and adding avatar animation configuration information to the AAU message, wherein the avatar animation configuration information corresponds to the avatar remove flag.

For some embodiments of the first example method, the avatar remove flag corresponds to at least one element of a set including a controller remove flag, a morph remove flag, a joint remove flag, a keypoint remove flag, a keypoint 2D remove flag, and a landmark remove flag.

A first example apparatus in accordance with some embodiments may include: a processor; and a memory storing instructions operative, when executed by the processor, to cause the apparatus to perform any one of the methods listed above.

A second example method in accordance with some embodiments may include: receiving an encoded Avatar Animation Unit (AAU) message; decoding the AAU message, wherein the AAU message satisfies an MPEG-based standard; obtaining avatar animation reconfiguration information from the AAU message, wherein the avatar animation reconfiguration information includes an avatar reconfiguration flag; and processing the avatar animation reconfiguration information based on the avatar reconfiguration flag.

For some embodiments of the second example method, processing the avatar animation reconfiguration information includes processing payload data in the AAU message.

For some embodiments of the second example method, processing the avatar animation reconfiguration information includes processing one or more units of avatar animation parameter data.

Some embodiments of the second example method may further include: determining that the avatar reconfiguration flag is equal to one; and replacing one or more avatar animation configuration data units.

Some embodiments of the second example method may further include: determining that the avatar reconfiguration flag is equal to zero; determining that an avatar remove flag is equal to zero; and removing avatar animation configuration information from memory, wherein the avatar animation configuration information corresponds to the avatar remove flag.

Some embodiments of the second example method may further include: determining that the avatar reconfiguration flag is equal to zero; determining that an avatar remove flag is equal to one; and adding avatar animation configuration information to memory, wherein the avatar animation configuration information corresponds to the avatar remove flag.

A second example apparatus in accordance with some embodiments may include: a processor; and a memory storing instructions operative, when executed by the processor, to cause the apparatus to perform any one of the methods listed above.

One or more embodiments provide a computer program including instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods include one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present application may refer to "determining" various pieces of information. Determining information may include one or more of, for example, estimating, calculating, predicting, or retrieving (e.g., from memory) the information.

The present application may refer to "accessing" various pieces of information. Accessing information may include one or more of, for example, receiving, retrieving (e.g., from memory), storing, moving, copying, calculating, determining, predicting, or estimating the information. Similarly, the present application may refer to "receiving" various pieces of information. Receiving information may include one or more of, for example, accessing or retrieving (e.g., from memory) the information.

It is to be understood that use of any of the following "/", "and/or", and "at least one of' is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present application or the following claims. Although features and elements are described herein in particular combinations, those of ordinary skill in the art will appreciate that such features or elements may be used alone or in any combination with the other features and elements. It is understood, therefore, that the overall teachings of the present application are not limited to the particular embodiments, implementations, and examples disclosed herein, but are intended to cover variations, modifications, and alternatives as defined by the appended claims and any and all equivalents thereof.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

Various numeric values may be used in the present application, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method comprising:
obtaining avatar animation reconfiguration information,
wherein the avatar animation reconfiguration information comprises an avatar reconfiguration flag;
generating an Avatar Animation Unit (AAU) message corresponding to the avatar animation reconfiguration information,
wherein the AAU message satisfies an MPEG-based standard;
encoding the AAU message; and
transmitting the encoded AAU message to a receiving device.

2. The method of claim 1, further comprising:
determining that the avatar reconfiguration flag is equal to zero; and
generating an avatar remove flag.

3. The method of claim 2, wherein the avatar animation reconfiguration information further comprises the avatar remove flag.

4. The method of any one of claims 2-3, further comprising initializing a state of the avatar remove flag.

5. The method of any one of claims 2-4, further comprising:
determining that the avatar remove flag is equal to zero; and
adding avatar animation configuration information to the AAU message,
wherein the avatar animation configuration information corresponds to the avatar remove flag.

6. The method of claim 1, further comprising:
determining that the avatar reconfiguration flag is equal to one; and
adding avatar animation configuration information to the AAU message,
wherein the avatar animation configuration information corresponds to the avatar remove flag.

7. The method of any one of claims 2-6, wherein the avatar remove flag corresponds to at least one element of a set comprising a controller remove flag, a morph remove flag, a joint remove flag, a keypoint remove flag, a keypoint 2D remove flag, and a landmark remove flag.

8. An apparatus comprising:
a processor; and
a memory storing instructions operative, when executed by the processor, to cause the apparatus to perform the method of any one of claims 1 through 7.

9. A method comprising:
receiving an encoded Avatar Animation Unit (AAU) message;
decoding the AAU message,
wherein the AAU message satisfies an MPEG-based standard;
obtaining avatar animation reconfiguration information from the AAU message,
wherein the avatar animation reconfiguration information comprises an avatar reconfiguration flag; and
processing the avatar animation reconfiguration information based on the avatar reconfiguration flag.

10. The method of claim 9, wherein processing the avatar animation reconfiguration information comprises processing payload data in the AAU message.

11. The method of any one of claims 9-10, wherein processing the avatar animation reconfiguration information comprises processing one or more units of avatar animation parameter data.

12. The method of any one of claims 9-11, further comprising:
determining that the avatar reconfiguration flag is equal to one; and
replacing one or more avatar animation configuration data units.

13. The method of any one of claims 9-11, further comprising:
determining that the avatar reconfiguration flag is equal to zero;
determining that an avatar remove flag is equal to zero; and
removing avatar animation configuration information from memory,
wherein the avatar animation configuration information corresponds to the avatar remove flag.

14. The method of any one of claims 9-11, further comprising:
determining that the avatar reconfiguration flag is equal to zero;
determining that an avatar remove flag is equal to one; and
adding avatar animation configuration information to memory,
wherein the avatar animation configuration information corresponds to the avatar remove flag.

15. An apparatus comprising:
a processor; and
a memory storing instructions operative, when executed by the processor, to cause the apparatus to perform the method of any one of claims 8 through 14.
